# EUROPEAN PATENT APPLICATION

(11) **EP 4 016 546 A1**
(43) Date of publication of application: **22.06.2022**
(21) Application number: 20306605.5
(22) Date of filing: 18.12.2020
(51) Int. Cl.: G21C 3/334, F16B 7/20

(54) **CONNECTION ARRANGEMENT FOR MECHANICALLY CONNECTING A FIRST ELEMENT AND A SECOND ELEMENT, SUCH AS A GUIDE TUBE AND A TIE PLATE OF A NUCLEAR FUEL ASSEMBLY**

(71) Applicant: Framatome, 92400 Courbevoie (FR)
(72) Inventor: LABARRIERE, Eric, 01800 SAINT- ELOI (FR)
(74) Representative: Lavoix

(57) **Abstract**

The connection arrangement is for the mechanical connection of a first element (4) having a connection portion (8) to a second element (6) having a housing (10), the connection arrangement comprising a connection ring (12) received inside the housing (10) being pivotable between an insertion/extraction position allowing insertion/extraction of the connection portion (8) into the housing (10) and a connection position preventing extraction of the connection portion (8) from the housing (10), and a locking ring (20) axially movable along the center axis (A) between a locked position preventing rotation of the connection ring (12) and an unlocked position allowing rotation of the connection ring (12) between the connection position and the insertion/extraction position.

## Description

The present invention relates to a connection arrangement for mechanically connecting a first element and a second element, such as e.g. a guide tube and a tie plate of a nuclear fuel assembly.

A nuclear fuel assembly, such as a nuclear fuel assembly for use in a WWER (Water Water Energy Reactor) or a PWR (Pressurized Water Reactor), is elongated along an assembly axis and comprises a plurality of fuel rods arranged in bundle and a skeleton for supporting the fuel rods.

The skeleton comprises a bottom nozzle and a top nozzle spaced one from the other along the assembly axis, guide tubes extending along the assembly axis with connecting the bottom nozzle to the top nozzle, and spacer grid secured to the guide tubes between the bottom nozzle and the top nozzle.

The fuel rods are received between the bottom nozzle and the upper nozzle with extending through the spacer grids, the spacer grids being configured for holding the fuel rods axially and transversely with maintaining the fuel rods in a transversely spaced relationship.

The top nozzle comprises a tie plate, the upper ends of the guide tubes being connected to the tie plate.

The connection between each guide tube and the tie plate is preferably removable for allowing removal of the top nozzle, e.g. during maintenance operations.

One of the aims of the invention is to propose a connection arrangement for removable mechanical connection of a first element and a second element, the connection arrangement being reliable and easy to operate for connecting and disconnecting the first element and the second element.

To this end, the invention proposes a connection arrangement for mechanical connection of a first element and a second element, the first element having a connection portion, the second element having a housing extending along a center axis for insertion of the connection portion, the connection arrangement comprising:
- a connection ring received inside the housing with being axially blocked and pivotable about the center axis between an insertion/extraction position allowing insertion/extraction of the connection portion into the housing and a connection position preventing extraction of the connection portion from the housing, and
- a locking ring received inside the housing with being blocked angularly about the center axis and axially movable along the center axis between a locked position preventing rotation of the connection ring between the connection position and the insertion/extraction position, in which at least one locking portion of one of the locking ring and the connection ring is engaged into an associated locking recess of the other, and an unlocked position allowing rotation of the connection ring between the connection position and the insertion/extraction position, in which each locking portion is disengaged from the associated locking recess.

In specific embodiments, the connection arrangement comprises one or several of the following optional features, taken individually or in any technically feasible combination:
- each locking portion is provided on the locking ring, each locking recess being provided on the connection ring;
- the connection arrangement has a connection configuration for retaining the connection portion inside the housing, in which the connection ring is in the connection position and the locking ring in the locked position and an insertion/extraction configuration for allowing extraction of the connection portion from the housing, in which the locking ring is in the unlocked position and the connection ring is in the insertion/extraction position;
- switching from the connection configuration to the insertion/extraction configuration is performed by sequentially translating the locking ring into the unlocked position and then pivoting the connection ring into the insertion/extraction position;
- switching from the insertion/extraction configuration to the connection configuration is performed by sequentially pivoting the connection ring from the insertion/extraction position to the connection position and then translating the locking ring from the unlocked position to the locked position.
- the connection arrangement comprises a return device configured for returning the locking ring from the unlocked position to the locked position;
- the return device comprises a spring member configured for urging the locking ring along the center axis towards the locked position;
- the spring member is an helical spring extending around the center axis;
- the connection ring is configured such that the connection ring in the insertion/extraction position prevent a return of the locking ring from the unlocked position to the locked position and that the connection ring in the connection position allows a return of the locking ring from the unlocked position to the locked position;
- the connection arrangement comprises an operating tool configured to be axially inserted into the housing along the center axis for moving the locking ring from the locked position to the unlocked position and then turned about the center axis for pivoting the connection ring from the connection position to the insertion/extraction position;
- the tool comprises an unlocking protrusion configured for pushing the locking ring axially from the locked position to the unlocked position upon axial insertion of the operating tool into the housing, and/or a coupling notch configured coupling the tool to the connection ring in rotation about the center axis once the tool is inserted into the housing;
- the first element and a second element are elements of a nuclear installation;
- the first element and the second element are elements of a nuclear fuel assembly;
- the first element and the second element are a guide tube and a tie plate of a nuclear fuel assembly.

The invention also relates to a nuclear fuel assembly comprising a plurality of fuel rods arranged into a bundle received between a bottom nozzle and a top nozzle, guide tubes connecting the bottom nozzle to the top nozzle, the top nozzle comprising a tie plate, each guide tube being connected to the tie plate via a respective connection arrangement as defined above.

The invention and its advantages will be better understood upon reading the following description that is given solely by way of non-limiting example and with reference to the appended drawings, in which:
- Figure 1 is a perspective exploded view of a first element, a second element and a connection arrangement for mechanically connecting the first element and the first element in a removable manner;
- Figure 2 is a cross-sectional view illustrating the connection arrangement respectively in a locked configuration;
- Figure 3 - 6 are perspective views illustrating in operation of the connection arrangement with an operating tool;
- Figure 7 is a side elevation view of a nuclear fuel assembly.

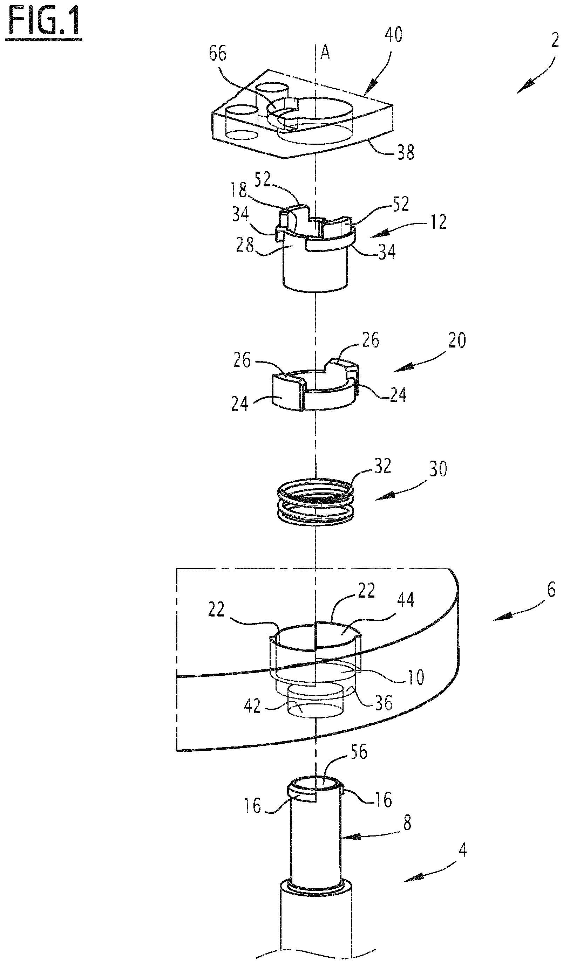

The connection arrangement 2 of Figure 1 is configured for the mechanical connection of a first element 4 and a second element 6 in a removable manner.

The first element 4 comprises a connection portion 8 and the second element 6 comprises a housing 10 for receiving the connection portion 8, the housing 10 extending along a center axis A and the connection portion 8 being configured for insertion into the housing 10 along the center axis A for the mechanical connection of the first element 4 and the second element 6.

The connection portion 8 is inserted in the housing 10 along the center axis A for the connection of the first element 4 to the second element 6 and is extracted from the housing 10 along the center axis A for disconnection of the first element 4 from the second element 6.

The connection arrangement 2 has an insertion/extraction configuration allowing insertion of the connection portion 8 into the housing 10 or extraction of the connection portion 8 from the housing 10 along the center axis A and a locked configuration preventing extraction of the connection portion 8 previously inserting into the housing 10.

The connection arrangement 2 comprises a connection ring 12 received inside the housing 10 with being axially blocked along the center axis A and pivotable about the center axis A between an insertion/extraction position allowing insertion/extraction of the connection portion 8 into/from the housing 10 and a connection position preventing extraction of the connection portion 8 previously inserted into the housing 10.

The connection ring 12 is centered on the center axis A. The connection ring 12 is mounted inside the housing 10 such that upon insertion into the housing 10, the connection portion 8 is inserted through the connection ring 12.

The connection ring 12 pivots for example of 90° between the connection position and the insertion/extraction position.

The connection portion 8 and the connection ring 12 are provided with associated connection features configured such as to allow insertion of the connection portion 8 into the connection ring 12 and extraction of the connection portion 8 from the connection ring 12 when the connection ring 12 is pivoted in the insertion/extraction position and to prevent extraction of the connection portion 8 from the connection ring 12 when the connection ring 12 is pivoted in the connection position.

In one exemplary embodiment, the connection portion 8 is provided with at least one connection protrusion 16 protruding on the external surface of the connection portion 8 and the connection ring 12 is provided with at least one ring protrusion 18 protruding on the internal surface of the connection ring 12.

In the insertion/extraction position of the connection ring 12, each connection protrusion 16 is offset angularly about the center axis A relative to each ring protrusion 18 to allow insertion/extraction of the connection portion 8 into/from the housing 10, each connection protrusion 16 being inserted passed the ring protrusion 18 upon full insertion of the connection portion 8 into the housing 10.

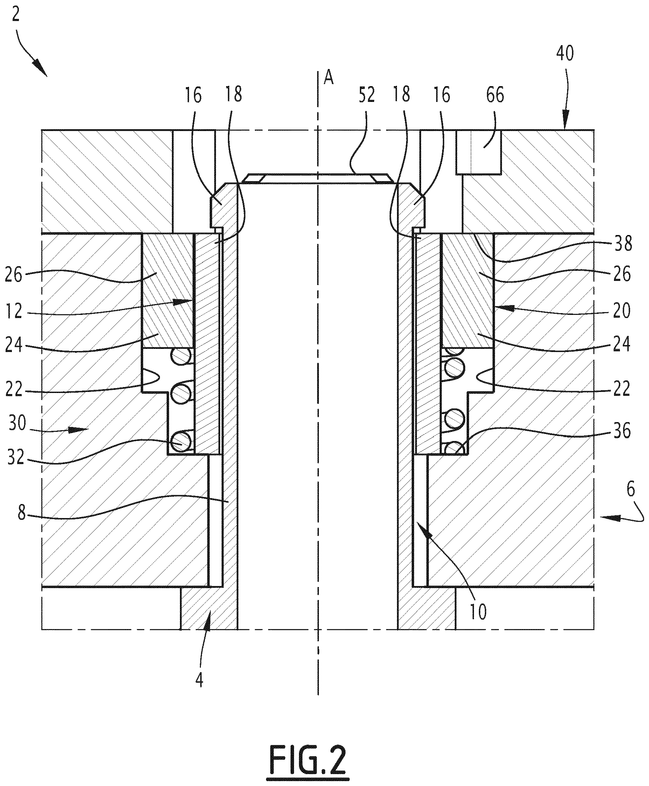

Once the connection portion 8 is inserted into the connection ring 12 and the connection ring 12 is pivoted into the connection position (Figure 2), each connection protrusion 16 is aligned with a ring protrusion 18 and cooperate with this ring protrusion 18 to prevent extraction of the connection portion 8 from the connection ring 12 and the housing 10.

In one exemplary embodiment, the connection portion 8 is provided with connection protrusions 16 spaced angularly about the center axis A and the connection ring 12 is provided with ring protrusions 18 spaced angularly about the center axis A.

In the insertion/extraction position of the connection ring 12, the connection protrusions 16 are able to slide along the center axis A with passing in interspaces defined between the ring protrusions 18 without interfering with the ring protrusions 18 upon insertion of the connection portion 8 into the connection ring 12.

Once the connection portion 8 is inserted into the connection ring 12 and the connection ring 12 is pivoted into the connection position (Figure 2), each connection protrusion 16 is in register with a respective one of the ring protrusions 18 and interferes with this ring protrusion 18 to prevent extraction of the connection portion 8 from the connection ring 12 and the housing 10.

In one exemplary embodiment, the connection portion 8 is provided with two connection protrusions 16 diametrically opposed about the center axis A and the connection ring 12 is provided with two ring protrusions 18 diametrically opposed about the center axis A.

The connection arrangement 2 comprises a locking ring 20 that is received inside the housing 10 with being blocked angularly about the center axis A and axially movable along the center axis A between a locked position (Figure 2) preventing rotation of the connection ring 12 between the connection position and the insertion/extraction position and an unlocked position allowing rotation of the connection ring 12 between the connection position and the insertion/extraction position.

The locking ring 20 is tubular and centered onto the center axis A.

The locking ring 20 is for example fitted around the connection ring 12 such that the connection ring 12 is received inside the locking ring 20. The locking ring 20 is slidable along the external surface of the connection ring 12.

The housing 10 and the locking ring 20 are configured such that the locking ring 20 is indexed angularly about the center axis A inside the housing 10 while being slidable along the center axis A inside the housing 10.

In one exemplary embodiment, one among the internal surface of the housing 10 and the external surface of the locking ring 20 is provided with at least one axial groove elongated along the center axis A, the other among the internal surface of the housing 10 and the external surface of the locking ring 20 being provided with on respective key associated to each groove, each key being received in the associated groove such as to be slidable along the groove with preventing rotation of the locking ring 20 relative to the housing 10 about the center axis A.

For example, at least one axial groove is provided on the internal surface of the housing 10, one respective key associated to each groove being provided on the outer surface of the locking ring 20.

In a preferred embodiment, two axial grooves 22 are provided on the internal surface of the housing 10 and two keys 24 are provided on the outer surface of the locking ring 20, each key 24 being received in a respective one of the grooves 22.

The two axial grooves 22 are preferably diametrically opposed relative to the center axis A, the two keys 24 being also diametrically opposed relative to the center axis A.

One among the connection ring 12 and the locking ring 20 is provided with at least one locking portion 26, the other one among the connection ring 12 and the locking ring 20 being provided with at least one locking recess 28, each locking portion 26 being associated to a respective locking recess 28.

In the locked position of the locking ring 20, each locking portion 26 is engaged into the associated locking recess 28 for preventing rotation of the connection ring 12 about the center axis A.

In the unlocked position of the locking ring 20, each locking portion 26 is disengaged from the associated locking recess 28 for allowing rotation of the connection ring 12 about the center axis A between the connection position and the insertion/extraction position.

Each locking portion 26 is able to insert into the associated locking recess 28 only when the connection ring 12 is in the connection position.

Each locking portion 26 cannot be inserted into the locking recess 28 when the connection ring 12 is in the insertion/extraction position.

In one example, the connection arrangement 2 comprises two locking portions 26 diametrically opposed about the center axis A, and two locking recesses 28 diametrically opposed about the center axis A.

In a preferred embodiment, each locking portion 26 is provided on the locking ring 20 and each locking recess 28 is provided on the connection ring 12.

Advantageously, the connection arrangement 2 comprises a return device 30 configured for returning the locking ring 20 into the locked position.

The return device 30 comprises for example a spring member 32 arranged for permanently urging the locking ring 20 from the unlocked position towards the locked position.

The spring member 32 is for example a helical spring extending around the center axis A. The spring member 32 is for example fitted the connection ring 12 that is received inside the spring member 32.

The spring member 32 and the locking ring 20 are both fitted onto the connection ring 12 inserted inside the spring member 32 and the locking ring 20, the spring member 32 and the locking ring 20 being stacked axially along the connection ring 12.

Preferably, the connection arrangement 2 is configured such that the connection ring 12 in the insertion/extraction position prevent the locking ring 20 from returning in the unlocked position.

In one exemplary embodiment, the connection ring 12 comprises at least one stop 34 protruding radially outwardly on the external surface 12A of the connection ring 12.

In the connection position of the connection ring 12, each locking portion 26 is aligned with a locking recess 28 and the locking ring 20 can move from the unlocked position to the locked position with the locking portion 26 engaging into the locking recess 28.

In the insertion/extraction position of the connection ring 12, each locking portion 26 is aligned with a stop 34 and abuts onto this stop 34, and the locking ring 20 is thus prevented from moving from the unlocked position to the locked position.

In a specific embodiment, the connection ring 12 is provided with stops 34 distributed circumferentially around the connection ring 12, locking recesses 28 being defined between the stops 34.

In a particular embodiment, the connection ring 12 comprises two stops 34 diametrically opposed, defining between them two locking recesses 28 diametrically opposed.

Advantageously, the connection ring 12 is retained axially inside the housing 10 between a first abutting surface 36 and a second abutting surface 38. The connection ring 12 is preferably fixed axially between the first abutting surface 36 and the second abutting surface 38.

The locking ring 20 is for example retained axially between the connection ring 12 and the first abutting surface 36.

In one exemplary embodiment, the second element 6 is provided with a retaining member 40 assembled to the second element 6 for retaining the connection ring 12 and the locking ring 20 inside the housing 10.

The first abutting surface 36 is formed on the second element 6 and the second abutting surface 38 is formed onto the retaining member 40.

The retaining member 40 is preferably assembled to the second element 6 in a removable manner, e.g. via screws.

Advantageously, the connection ring 12, the locking ring 20, and if applicable, the return device 30 are inserted into the housing 10 provided in the second element 6 and the retaining member 40 is then assembled to the second element 6, the connection ring 12, the locking ring 20, and if applicable, the return device 30 being then retained inside the housing 10.

In one embodiment, the housing 10 extends through the second element 6 with opening on two opposed sides of the second element 6 via a first opening 42 allowing insertion/extraction of the first element 4 into/from the housing 10 and a second opening 44 allowing operation of the connection arrangement 2 for locking/releasing the connection portion 8 inside/from the housing 10.

The first element 4 is inserted/extracted into/from the housing 10 at one side of the second element 2 and the connection arrangement 2 is operated from the other side of the second element 2.

The first opening 42 allows insertion/extraction of the connection portion 8 into/from the housing 10 along the center axis A and the second opening 44 allows operating the locking ring 20 and the connection ring 12 for moving the connection arrangement between the locking configuration and the insertion/extraction configuration.

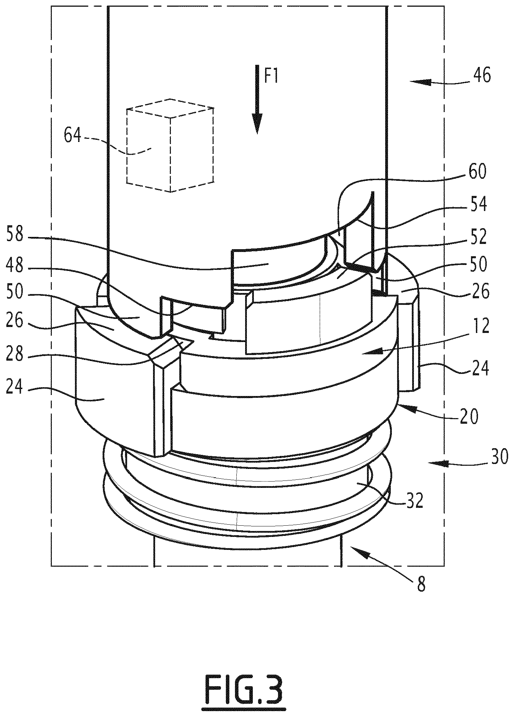

As illustrated on Figure 3 - 6, the connection arrangement 2 comprises a tool 46 for operating the connection ring 12 and the locking ring 20 for locking/releasing the connection portion 8 inside/from the housing 10.

The tool 46 is preferably configured for insertion into the housing 10 via the second opening 44 for operating the locking ring 20 and the connection ring 12.

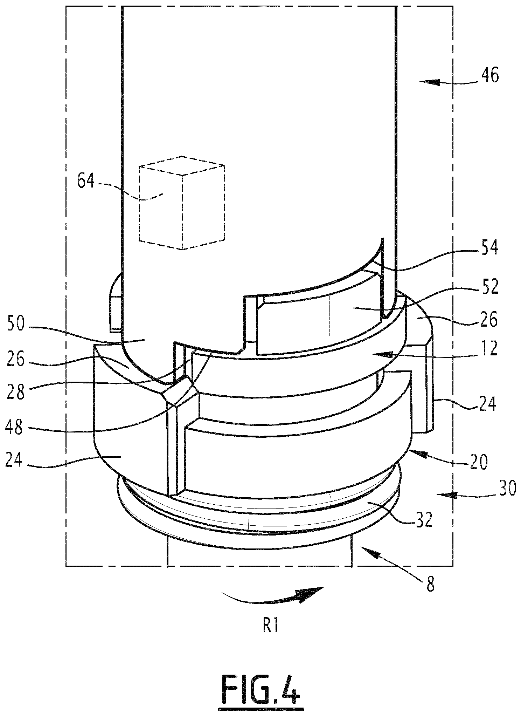

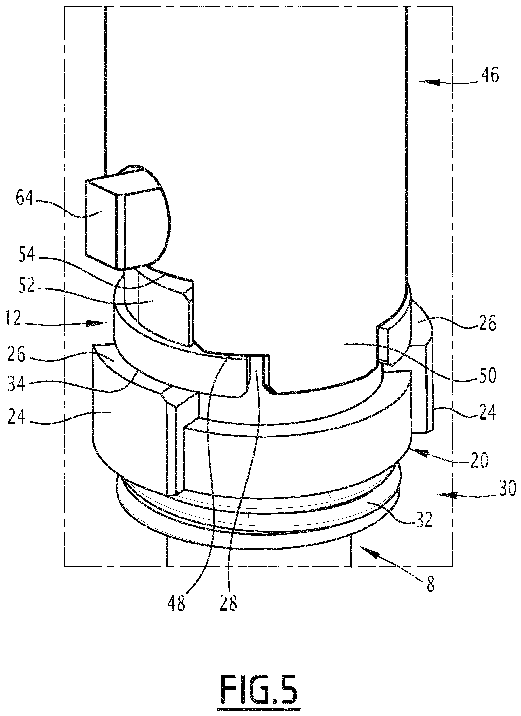

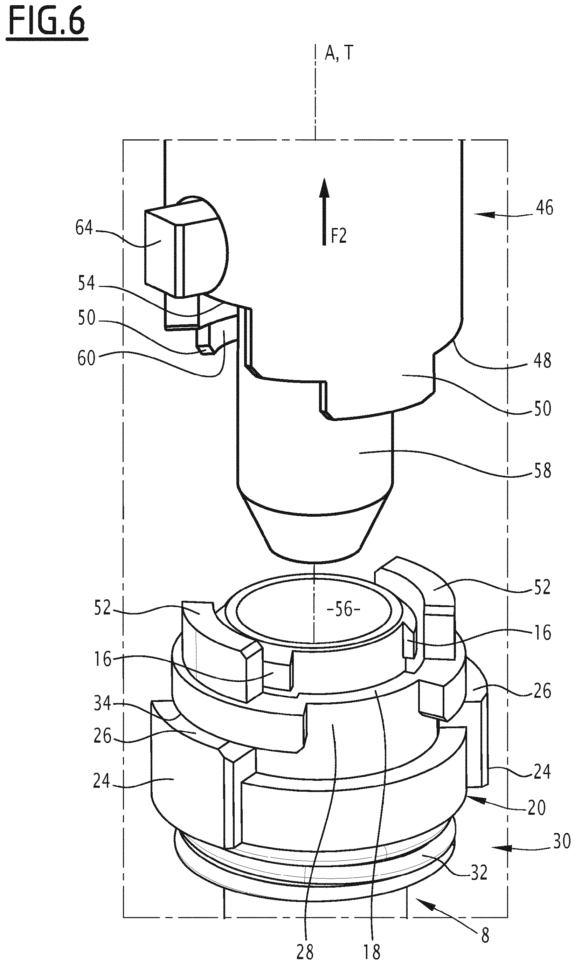

In one exemplary embodiment, in view of passing from the connection configuration to the insertion/extraction configuration, the tool 46 is configured to be sequentially inserted the housing 10 along the center axis A for pushing the locking ring 20 along the center axis A from the locked position to the unlocked position (Figures 3 and 4), and then pivoted about the center axis A for pivoting the connection ring 12 from the connection position to the insertion/extraction position (Figures 5 and 6).

In a reversed manner, in view of passing from the insertion/extraction configuration, the tool 46 is configured for sequentially inserting the tool 46 into the housing 10, then pivoting the tool 46 about the center axis for pivoting the connection ring 12 from the insertion/extraction position to the connection position, and then extracting the tool 46 from the housing 10 for allowing the locking ring 20 to move from the unlocked position to the locked position, e.g. under action of the return device 30.

The tool 46 extends along a tool axis T (Figure 6) that is aligned with the center axis A when using the tool 46 for changing the configuration of the connection arrangement 2

In one exemplary embodiment, the tool 46 comprises an annular edge 48 centered on the tool axis T and provided with at least one unlocking protrusion 50 protruding axially from the annular edge 48, such that upon insertion of the tool 46 into the housing 10 axially along the center axis A, each unlocking protrusion 50 pushes the locking ring 20 axially from the locked position to the unlocked position.

Each unlocking protrusion 50 has for example a thickness (taken radially relative to the tool axis T) that is strictly smaller that the thickness of the annular edge 48.

For example, when the locking ring 20 is provided with at least one locking portion 26 for engaging into a locking recess 28 of the connection ring 12, each unlocking protrusion 50 is configured for pushing one said locking portion 26 axially for disengaging the locking portion 26 from the locking recess 28.

Preferably, the tool 46 comprises one respective unlocking protrusion 50 associated to each locking portion 26 of the locking ring 20.

The tool 46 comprises for example two unlocking protrusion 50 diametrically opposed relative to the tool axis T.

Optionally, the connection ring 12 is provided with at least one coupling lug 52 protruding from the connection ring 12 and the annular edge 48 of the tool 46 comprises at least one coupling notch 54, each coupling notch 54 being configured for receiving a respective coupling lug 52 upon insertion of the tool 46 into the housing 10 for moving the locking ring 20 from the locked position to the unlocked position, each coupling lug 52 engaged into a coupling notch 54 coupling the tool 46 and the connection ring 12 in rotation about the center axis A.

The coupling lug 52 is not engaged from the coupling notch 54 before insertion of the tool 46 into the housing 10 for moving the locking ring 20 from the locked position to the unlocked position, and is engaged into the coupling notch 54 upon insertion of the tool 46 into the housing 10 for moving the locking ring 20 from the locked position to the unlocked position.

Preferably, the tool 46 comprises one respective coupling notch 54 associated to each coupling lug 52.

In one exemplary embodiment, the connection ring 12 is provided with two coupling lugs 52 diametrically opposed relative to the center axis A and the tool 46 comprises two coupling notches 54 diametrically opposed relative to the tool axis T.

In one exemplary embodiment, the annular edge 48 of the tool 46 is provided along its circumference with unlocking protrusions 50 alternating with coupling notches 54, with the unlocking protrusions 50 and the coupling notches 54 being e.g. circumferentially uniformly distributed.

In a specific embodiment, the annular edge 48 of the tool 46 comprises two unlocking protrusions 50 diametrically opposed relative to the tool axis T and two coupling notches 54 diametrically opposed relative to the tool axis T. The unlocking protrusions 50 and the coupling notches 54 are e.g. distributed uniformly at 90° along the circumference of the annular edge 48.

The coupling lug(s) 52 and the coupling notch(es) 54 are optional. In an alternative embodiment, each unlocking protrusion 50 is configured for coupling the tool 46 and the connection ring 12 in rotation about the center axis A when the tool 46 is inserted into the housing 10 such as to push the locking sleeve 30 into the unlocked position.

In such case, each unlocking protrusion 50 is for example inserted into a locking recess 28 and cooperates with sides of the locking recess 28 for coupling the tool 46 and the connection ring 12 in rotation about the center axis A.

In one embodiment, the first element 12 comprising a central opening 56 (Figures 2 and 6) extending along the center axis A at least in the connection portion 8 and the tool 46 comprises a centering pin 58 centered onto the tool axis T, the centering pin 58 being configured to penetrate into the central opening 56 of the first element 12 upon insertion of the tool 46 into the housing 10 for centering the tool 46 relative to the first element 12.

The annular edge 48 of the tool 46 surrounds the centering pin 58, with an annular space 60 (Figure 3) between the annular edge 48 and the centering pin 58.

Optionally, the connection arrangement 2 comprises a rotation limiting device 62 configured for limiting the angular rotation of the tool 46 once the tool 46 is inserted into the housing 10 such that the locking ring 20 is moved into the unlocked position.

In one exemplary embodiment, the rotation limiting device 62 comprises a rotation limiter 64 (in dotted lines on Figure 3) provided on the tool 46 and configured to engaged into a rotation limiting slot 66 (see Figure 1) upon insertion of the tool 46 into the housing 10 such that the locking ring 20 is moved into the unlocked position.

The rotation limiter 64 protrudes laterally from the tool 46 and the rotation limiting slot 66 is provided e.g. on the retaining member 40.

The rotation-limiting slot 66 extends around the center axis A on an angular extend corresponding to the angle of rotation of the connection ring 12 between the connection position and the insertion/extraction position. This angle of rotation is e.g. of 90°.

The operation of the connection arrangement 2 as illustrated on Figures 3 - 6 will be described with reference to Figures 3 - 6 and also to Figures 2 which illustrates the connection arrangement 2 in the connection configuration.

The operation is started when the connection arrangement 2 is in the connection configuration, as illustrated on Figures 2 and 3. The connection portion 8 of the first element 4 is inserted into the housing 10 of the second element 6, the connection ring 12 being in the connection position and the locking ring 20 being in the locked position.

In view of disconnecting the first element 4 and the second element 6, the tool 46 is inserted in the housing 10, here via the second opening 44.

If applicable, the centering pin 58 of the tool 46 is inserted in the central opening 56 of the first element 4 for centering the tool 46 relative to the first element 4 such that the tool axis T is substantially collinear with the center axis A.

The tool 46 is orientated about the tool axis T such that each unlocking protrusion 50 is aligned with a respective locking portion 26 of the locking ring 20 (see Figure 3).

The tool 46 is then pushed axially (see arrow F1 on Figure 3) such that each unlocking protrusion 50 pushes on the corresponding locking portion 26 to move the locking ring 20 axially in the unlocked position. Each locking portion 26 is disengaged from the associated locking recess 28 (See Figure 4).

In an embodiment in which the coupling lug(s) 52 and the coupling notch(es) 54 are provided, upon axial movement of the tool 46, each coupling lug 52 engages into a respective coupling notch 54.

The tool 46 is then pivoted about the tool axis T (see arrow R1 on Figure 4) and thus rotates the connection ring 12 form the connection position into the insertion/extraction position (Figure 5).

By doing so, each ring protrusion 18 of the connection ring 12 becomes angularly offset from each connection protrusion 16 of the connection portion 8 of the first element 4.

The first element 4 is no longer retained axially by the connection ring 12 and can be extracted from the housing 10 via the first opening 42.

The tool 46 can then be extracted (see arrow F2 on Figure 6).

The locking ring 20 in the unlocked position is retained in this unlocked position, here by the connection ring 12 positioned in the insertion/extraction position.

In particular, at least one locking portion 26 or each locking portion 26 of the locking ring 20 abuts axially against a stop 34 thus preventing the locking ring 20 from returning in the locking position.

In view of connecting the first element 4 to the second element 6, the operations are performed in a reverse manner.

The connection portion 8 of the first element 4 is inserted into the housing 10, through the connection ring 12, via the first opening 42, such that the connection protrusion(s) 16 axially pass the ring protrusion(s) 18.

The tool 46 is inserted into the housing 10 through the second opening 44 (before or after insertion of the connection portion 8 into the housing) such as to be coupled with the connection ring 12 in rotation about the center axis A.

The tool 46 is pivoted about the tool axis T such as to rotate the connection ring 12 into the connection position.

By doing so, each connection protrusion 16 becomes aligned with a ring protrusion 18 such that the connection portion 18 is prevented from extraction out of the housing 10 via the first opening 42.

Besides, each locking recess 28 of the connection ring 12 is also aligned with a locking portion 26 of the locking ring 20.

The tool 46 is then removed from the housing 10, via the second opening 44, whereby the locking ring 20 is returned into the locking position by the return device 30, each locking portion 26 of the locking ring 20 engaging into a locking recess 28 of the connection ring 12.

From this position, the locking ring 20 prevents the connection ring 12 from rotating from the connection position to the insertion/extraction position. The first element 4 is thus connected to the second element 6 in a locked manner.

In one exemplary embodiment, the first element 4 is a tube and the second element 6 is a plate. The connection portion 8 of the first element 6 is for example a terminal portion of the first element 6 provided as a tube.

The main part 38 of the second element 6 is for example a main plate, the retaining member 40 being an auxiliary plate superposed onto the main plate for retaining the connection ring 12 and the locking ring 20 into the housing 10.

In a specific embodiment, the first element 4 and the second element 6 are components of a nuclear reactor or components of a nuclear fuel assembly, in particular a guide tube and a tie plate.

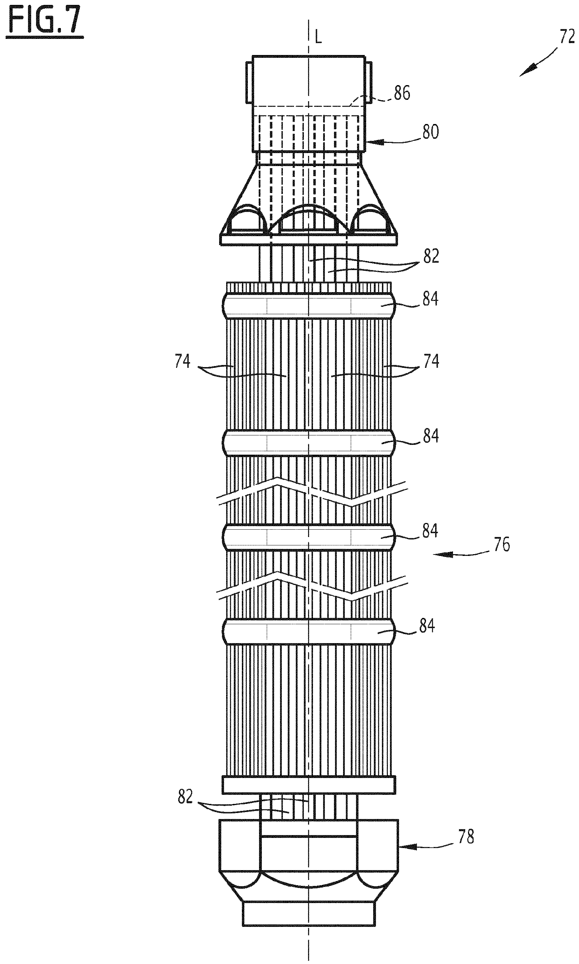

The nuclear fuel assembly 72 of Figure 7 is elongated along an assembly axis L. In operation, the nuclear fuel assembly 72 is inserted in a reactor core with the assembly axis L being vertical.

In the following, the terms "upper", "lower", "bottom", "top", "longitudinal" and "transversal" refer to the position of the nuclear fuel assembly in operation, with the assembly axis L being longitudinal and vertical.

The nuclear fuel assembly 72 comprises a bundle of nuclear fuel rods 74 and a skeleton 76 supporting the fuel rods 74. The fuel rods 74 extend parallel to each other and to the assembly axis L.

The skeleton 76 comprises a bottom nozzle 78 and a top nozzle 80 spaced along the assembly axis L.

The skeleton 6 comprises guide tubes 82 connecting the bottom nozzle 78 to the top nozzle 80 with maintaining a predetermined spacing along the assembly axis L between the bottom nozzle 8 and the top nozzle 80. The guide tubes 82 extend parallel to the assembly axis L. The fuel rods 74 are received between the bottom nozzle 78 and the top nozzle 80.

The skeleton 76 comprises a plurality of spacer grids 84 distributed along the guide tubes 82 and fixedly attached to the guide tubes8. The fuel rods 74 extend through the spaced grids 84. Each spacer grid 84 is configured for supporting the fuel rods7 4 along the assembly axis L and transversely to the assembly axis L. Each spacer grid 84 is configured for supporting the fuel rods 74 in a transversely spaced relationship.

In one exemplary embodiment, the fuel rods 74 are maintained transversely at the nodes of an imaginary hexagonal network. In such case, the bundle of fuel rods 74 has for example a hexagonal contour. The guide tubes 82 are positioned at some of the nodes of the imaginary hexagonal network.

The nuclear fuel assembly 72 is for example designed for a so-called WWER (Water Water Energy Reactor). The nuclear fuel assemblies 2 for WWER generally have bundle of fuel rods 4 exhibiting a hexagonal contour.

The top nozzle 80 comprises a tie plate 86 that is attached to the upper ends of the guide tubes 82.

At least one of the guide tubes 82 is attached to the tie plate 86 via a connection arrangement 2 as described above, the guide tube 82 defining the first element 4 and the tie plate 86 defining the second element.

Each connection arrangement 2 is operable from the top of the upper tie plate 86 for connecting/disconnecting the guide tube 82 to/from the upper tie plate 86.

The connection arrangements 2 thus allow easy operation for connecting/disconnecting the guide tube 82 to/from the upper tie plate 86 for removing the upper tie plate 86 from the remainder of the nuclear fuel assembly during maintenance operations.

The invention is not limited to the exemplary embodiments and variants described above in reference to Figures 1 - 6.

In the exemplary embodiment of Figures 1 - 6, the second element 6 comprises a retaining member 40 that is attached on top the second element 6 for retaining the connection ring 12 and the locking ring 20, and if applicable the return device 30, into the housing 10.

In an application for the connection of guide tubes to a tie plate, the invention is not limited to a nuclear fuel assembly for a WWER, but also applies for example for a nuclear fuel assembly for a PWR.

## Claims

1. Connection arrangement for mechanical connection of a first element (4) and a second element (6), the first element (4) having a connection portion (8), the second element (6) having a housing (10) extending along a center axis (A) for insertion of the connection portion (8), the connection arrangement comprising:
- a connection ring (12) received inside the housing (10) with being axially blocked and pivotable about the center axis (A) between an insertion/extraction position allowing insertion/extraction of the connection portion (8) into the housing (10) and a connection position preventing extraction of the connection portion (8) from the housing (10), and
- a locking ring (20) received inside the housing (10) with being blocked angularly about the center axis (A) and axially movable along the center axis (A) between a locked position preventing rotation of the connection ring (12) between the connection position and the insertion/extraction position, in which at least one locking portion (26) of one of the locking ring (20) and the connection ring (12) is engaged into an associated locking recess (28) of the other, and an unlocked position allowing rotation of the connection ring (12) between the connection position and the insertion/extraction position, in which each locking portion (26) is disengaged from the associated locking recess (28).

2. Connection arrangement according to claim 1, wherein each locking portion (26) is provided on the locking ring (20); each locking recess (28) being provided on the connection ring (12).

3. Connection arrangement according to claim 1 or claim 2, having a connection configuration for retaining the connection portion (8) inside the housing (10), in which the connection ring (12) is in the connection position and the locking ring (20) in the locked position and an insertion/extraction configuration for allowing extraction of the connection portion (8) from the housing (10), in which the locking ring (20) is in the unlocked position and the connection ring (12) is in the insertion/extraction position.

4. Connection arrangement according to claim 3, wherein switching from the connection configuration to the insertion/extraction configuration is performed by sequentially translating the locking ring (20) into the unlocked position and then pivoting the connection ring (12) into the insertion/extraction position.

5. Connection arrangement according to claim 3 or claim 4, wherein switching from the insertion/extraction configuration to the connection configuration is performed by sequentially pivoting the connection ring (12) from the insertion/extraction position to the connection position and then translating the locking ring (20) from the unlocked position to the locked position.

6. Connection arrangement according to any one of the preceding claims, comprising a return device (30) configured for returning the locking ring (20) from the unlocked position to the locked position.

7. Connection arrangement according to claim 6, wherein the return device (30) comprises a spring member (32) configured for urging the locking ring (20) along the center axis (A) towards the locked position.

8. Connection arrangement according to claim 6 or 7, wherein the spring member (32) is an helical spring extending around the center axis (A).

9. Connection arrangement according to any one of the preceding claims, wherein the connection ring (12) is configured such that the connection ring (12) in the insertion/extraction position prevent a return of the locking ring (20) from the unlocked position to the locked position and that the connection ring (12) in the connection position allows a return of the locking ring (20) from the unlocked position to the locked position.

10. Connection arrangement according to any one of the preceding claims, comprising an operating tool (46) configured to be axially inserted into the housing (10) along the center axis (A) for moving the locking ring (20) from the locked position to the unlocked position and then turned about the center axis (A) for pivoting the connection ring (12) from the connection position to the insertion/extraction position.

11. Connection arrangement according to claim 10, wherein the tool comprises an unlocking protrusion (50) configured for pushing the locking ring (20) axially from the locked position to the unlocked position upon axial insertion of the operating tool (46) into the housing (10), and/or a coupling notch (54) configured coupling the tool (46) to the connection ring (12) in rotation about the center axis (A) once the tool is inserted into the housing (10).

12. Connection arrangement according to any one of the preceding claims, wherein the first element (4) and a second element (6) are elements of a nuclear installation.

13. Connection arrangement according to any one of the preceding claims, wherein the first element (4) and the second element (6) are elements of a nuclear fuel assembly.

14. Connection arrangement according to any one of the preceding claims, wherein the first element (4) and the second element (6) are a guide tube (82) and a tie plate (86) of a nuclear fuel assembly.

15. Nuclear fuel assembly comprising a plurality of fuel rods (84) arranged into a bundle received between a bottom nozzle (78) and a top nozzle (80), guide tubes (82) connecting the bottom nozzle (78) to the top nozzle (80), the top nozzle (80) comprising a tie plate (86), each guide tube (82) being connected to the tie plate (86) via a respective connection arrangement as in any one of the preceding claims.
